# EUROPÄISCHE PATENTSCHRIFT

(11) **EP 2 283 426 B1**
(45) Veröffentlichungstag und Bekanntmachung des Hinweises auf die Patenterteilung: **02.11.2011**
(21) Anmeldenummer: 09741788.5
(22) Anmeldetag: 26.03.2009
(51) Int. Cl.: G06F 11/00

(54) **VERFAHREN UND VORRICHTUNG ZUR KORREKTUR VON DIGITAL ÜBERTRAGENEN INFORMATIONEN**
METHOD AND APPARATUS FOR CORRECTION OF DIGITALLY TRANSMITTED INFORMATION
PROCÉDÉ ET DISPOSITIF PERMETTANT DE CORRIGER DES INFORMATIONS TRANSMISES SOUS FORME NUMÉRIQUE

(30) Priorität: 08.05.2008 DE 102008022839
(43) Veröffentlichungstag der Anmeldung: 16.02.2011
(73) Patentinhaber: dSPACE digital signal processing and control engineering GmbH, 33102 Paderborn (DE)
(72) Erfinder: SCHÜTTE, Steffen, 31552 Apelern (DE)
(86) Internationale Anmeldenummer: PCT/EP2009/002212
(87) Internationale Veröffentlichungsnummer: WO 2009/135569

(56) Entgegenhaltungen:
- WO-A-02/079970
- WO-A-2006/105108

## Beschreibung

Die Erfindung betrifft ein Verfahren und eine Vorrichtung zur Korrektur von digitalen Informationen, die von einer Informationsquelle an eine Informationssenke übertragen werden.

Die Informationsquellen und die Informationssenken im Sinne der Erfindung können sich auf einem einzigen Computer befinden oder auf mehreren vernetzten Computern oder anderen Mikroprozessor-gesteuerten Systemen (z.B. Steuergeräte aus der Automobilindustrie) angeordnet sein. Sofern sich die Informationsquellen und Informationssenken auf einem einzigen Computersystem befinden, kann die Informationsquelle im Wesentlichen durch ein erstes Computerprogramm bzw. einen ersten Computerprogrammteil gebildet sein, und die Informationssenke im Wesentlichen durch ein zweites Computerprogramm bzw. einen zweiten Computerprogrammteil gebildet sein.

Sofern sich die Informationsquelle und die Informationssenke nicht auf einem einzigen Computersystem befindet, sondern auf mehreren Computern bzw. Mikroprozessor-gesteuerten Systemen setzt die Erfindung voraus, dass diese Computer bzw. Systeme miteinander vernetzt sind.

Ein vernetztes System im Sinne der Erfindung umfasst mindestens zwei Netzwerkkomponenten, die jeweils über die Fähigkeit verfügen, digitale Informationen auszusenden und/oder digitale Informationen zu empfangen, genauer gesagt muss die Informationsquelle zumindest Informationen versenden und die Informationssenke zumindet Informationen empfangen können.

Aus dem Stand der Technik sind vielerlei Verfahren und Vorrichtungen zur Informationsübertragung innerhalb des vernetzten Systems bekannt. Eine Untermenge der vernetzten Systeme stellen Bussystem dar, die oft durch Standards beschrieben werden.

Beispiele für Bussysteme, die auch in der Automobil-Industrie oder in der industriellen Automatisierungstechnik eingesetzt werden, sind das CAN (Controller Area Network) gemäß ISO 11898, das LIN (Local Interconnect Network) oder FlexRay. Details hierzu finden sich in dem Buch "Bussysteme in der Fahrzeugtechnik" von W. Zimmermann und R. Schmidgall, 1. Auflage April 2006, Friedr. Vieweg & Sohn Verlag, GWV Fachverlage GmbH, Wiesbaden.

Die an dem Bussystem angeschlossenen Komponenten werden häufig als Busteilnehmer oder als Knoten bezeichnet. Diese Busteilnehmer können beispielsweise Steuergeräte, Bordcomputer, intelligente Sensoren und intelligente Aktoren etc. sein. Der Aufbau, die Funktionen und Eigenschaften von Bustopologien, Busprotokollen und Busschnittstellen sind dem Fachmann bekannt und daher nicht Bestandteil dieser Beschreibung.

Ebenso ist es bekannt, die Informationen, die zwischen den Netzwerkkomponenten (insbesondere den Busteilnehmern) ausgetauscht werden, aufzuzeichnen, um die Aufzeichnungen beispielsweise für Analyse- und/oder Diagnose- und/oder Test- und/oder Simulations-Zwecke zu verwenden.

Die über das Netzwerk ausgetauschten Informationen beinhalten oft Werte von Variablen oder von Signalen (kurz Variablenwerte oder Signalwerte), die definierte Zustände der Komponenten des vernetzten Systems repräsentieren.

In der Druckschrift WO 2006/105108 A2 wird ein Verfahren beschrieben, bei dem zur Auflösung bzw. Beseitigung eines mehrdeutigen Zeichens in einer Zeichenkette, die von einem OCR eingelesen wird, folgende Schritte ausgeführt werden:
- Bildung von Zeichenketten-Permutatlonen der Zeichenkette durch Austausch des mehrdeutigen Zeichend mit einer Vielzahl von Ersatz-Zeichen;
- Ableiten von sogenannten "Xgraphs", also von Kombinationen von zwei oder mehr Buchstaben, von den Zeichenfolge-Permutationen;
- Abgleichen der Xgraphs mit einer Referenz-Menge von gültigen Xgraphs;
- Erstellen von Lösungs-Permutationen, indem von den Zeichenketten-Permutationen jede Zeichenketten-Permutation entfernt wird, die einen Xgraph enthält, der nicht einem zulässigen Xgraph der Referenz-Menge entspricht; und
- Ausgabe der Lösungs-Permutationen.

In dieser Druckschrift wird des Weiteren ein System und ein Computerprogramm-Produkt zur Ausführung des In der WO 2006/105108 A2 beschriebenen Verfahrens offenbart, jedoch ist dem Dokument einerseits kein Hinweis zu entnehmen, wie beim Vorliegen von fehlerbehafteten Variablennamen In einer Vorrichtung mit einer Informationsquelle und einer Informationssenke die Voraussetzungen für eine ordnungsgemäße Kommunikation herbeizuführen ist, und andererseits Ist das Verfahren gemäß der WO 2006/105108 A2 insbesondere ungeeignet, dynamisch veränderbare Entscheidungskriterien für die Verwendung bzw. Bearbeitung von Variablennamen bereitzustellen.

In der weiteren Druckschrift WO 02/079970 A2 wird ein Verfahren zur Steuerung eines Computers beschrieben, wobei von dem Rechner auszuführende Funktionen sowie ggf. Parameter, etc. mittels eines Spracherkennungssystems eingegeben und durch eine manuelle Eingabe, Insbesondere einen Tastendruck, abgeschlossen werden. Das Verfahren gemäß WO 02/079970 A2 trennt zunächst die eingegebenen Befehle von den eingegebenen Daten (bspw. Variablennamen) und nutzt die Tatsache aus, dass in dem Verfahren gemäß dieser Druckschrift zwar ein "unbeschränkter Variablannamen-Satz" aber gleichzeitig ein "beschränkter Befehlssatz" vorliegt. Folglich kann ein über die Sprache eingegebener Befehl mittels "Vergleich der Übereinstimmungen mit sämtlichen Elementen des Befehlswortschatzes" erleichtert werden. Neben dem Verfahren Ist In dieser Druckschrift auch eine Computeranlage zur Durchführung des Verfahrens beschrieben. Auch für die Druckschrift WO 02/079970 A2 gilt, dass hierin kein Hinweis zu entnehmen ist, wie beim Vorliegen von fehlerbehafteten Variablennamen in einer Vorrichtung mit einer Informationsquelle und einer Informationssenke die Voraussetzungen für eine ordnungsgemäße Kommunikation herbeizuführen sind. Außerdem ist das Verfahren gemäß der WO 02/079970 A2 insbesondere ungeeignet, um dynamisch veränderbare Entscheidungskriterien für die Verwendung bzw. Bearbeitung von Variablennamen bereitzustellen.

Da es für die Darstellung der Erfindung nicht von Bedeutung ist, ob ein Variable oder ein Signal übertragen wird und zudem ein Signal durch eine Variable repräsentiert werden kann, soll im folgenden Text der Begriff "Variable" sowohl In seinem eigentlichen Wortsinn als auch als Synonym für "Signal" stehen. Analoges gilt im folgenden Text für die Begriffe "Variablenwert" und "Signalwert".
Für die korrekte Weiterleitung der Variablenwerte ist es natürlich essentiell, dass für die Empfängerseite eindeutig erkennbar ist, welche Variable von der Senderseite übertragen wird oder übertragen wurde. Hierzu ist es üblich, den Variablen einen Namen zuzuordnen. Die über das Netzwerk übertragene Information enthält demgemäß einen Variablennamen und zudem oft einen Variablenwert, der dem Variablennamen zugeordnet ist.
Wird nur der Variablenname ohne einen Variablenwert via Netzwerk übermittelt, kann dies beispielsweise je nach vordefinierter Konvention, also je nachdem, ob hier "positive" oder "negative" Logik anwendbar Ist, bedeuten, dass die Variable von der Informationssenke als im Zustand "EIN" (positive Logik) oder als im Zustand "AUS" befindlich (negative Logik) zu interpretieren ist.

Üblicherweise ist der Variablenname, der von der Informationsquelle (z.B. ein erstes Steuergerät) vergeben wurde, der Informationssenke (z.B. ein zweites Steuergerät) bekannt. Beispielsweise kann via Netzwerk von der Informationsquelle eine Variable mit den Namen "Signal1_Out" an die Informationssenke übertragen werden.
Die Informationssenke wird im Normalfall die Variable "Signal1_Out" zwischenspeichern und an eine Software-Komponente weiterleiten, die diese Variable verwendet.

Die Variablennamen In einem vernetzten System können an Namenskonventionen gebunden sein, so dass beispielsweise eine von einer Informationsquelle (beispielweise ein erster Busteilnehmer) ausgehende Variable eine Namens-Endung "Out" aufweist und eine von einer Informationssenke (beispielsweise ein zweiter Busteilnehmer) aus dem Netzwerk eingelesene Variable vor der weiteren Verwendung eine Namens-Endung "In" tragen muss. In diesem Beispiel wäre also von der Informationssenke nach dem Einlesen der Variable zunächst eine Umbenennung vorzunehmen. Solange diese Vorgehensweise durch alle Informationssenken (also beispielweise alle Busteilnehmern die Informationen vom Bus einlesen) angewendet wird, ist eine entsprechende Umbenennung der Variablen vergleichsweise einfach programmtechnisch umsetzbar.

Nun können aber Programmierfehler, Unachtsamkeiten bei der Namensvergabe oder Unstimmigkeiten beim Anlegen von Variablenlisten oder zugehörigen Alias-Listen dazu führen, dass der Variablenname der Informationsquelle und der Informationssenke voneinander abweichen und zwar nicht in einer vorhersehbaren Weise (beispielsweise mit der Kennung "Out" anstelle "In") wie im vorherigen Absatz beschrieben, sondern in beliebiger unvorhersehbarer Weise. Die falschen Zeichen innerhalb der Variablennamen können an beliebigen Stellen der Namens-Zeichenkette der Variable auftreten, wobei der betreffende Variablenname zu viele oder zu wenige Zeichen und dabei möglicherweise jeweils zusätzlich falsche Zeichen aufweisen kann.

Wird bei der Kommunikation zwischen Netzwerkkomponenten, also beispielsweise zwischen Busteilnehmern, ein falscher Variablenname via Bus übertragen, dann führt die zwangsläufig zu einem Übertragungsfehler. Die Fehlerbeseitigung (Debugging) kann, beispielsweise bei vernetzten Systemen mit beispielsweise einigen hundert oder mehr Variablen sehr langwierig und zeitaufwendig sein.

Ein gleichermaßen gravierendes Problem wird in der Regel bestehen, wenn Variablenwerte zwischen einer Informationsquelle und einer Informatianssenke auf einem einzigen Computer oder einem einzigen Mikroprozessor-gesteuerten Gerät ausgetauscht werden und dabei die korrespondierenden Variablennamen nicht übereinstimmen. Dies könnte beispielsweise dann der Fall sein, wenn die Informationsquelle im Wesentlichen durch ein erstes Computerprogramm bzw. einen ersten Computerprogrammteil gebildet ist, und die Informationssenke im Wesentlichen durch ein zweites Computerprogramm bzw. einen zweiten Computerprogrammtell gebildet ist, wobei die von der Informationsquelle bereitgestellte erste Variable keinen Namen aufweist der von der Informationssenke "erwartet" wird.

Hier setzt die vorliegende Erfindung an.

Der vorliegenden Erfindung liegt die Aufgabe zugrunde, ein Verfahren und eine Vorrichtung vorzuschlagen, die den genannten Informationsquellen und Informationssenken ermöglicht, sogar bei fehlerbehafteten Variablennamen eine ordnungsgemäße Kommunikation durchzuführen.

Die erfindungsgemäße Lösung für diese Aufgabe ist, soweit es das Verfahren betrifft, in Anspruch 1 angegeben und soweit es die Vorrichtung betrifft, in Anspruch 8 angegeben. Konkretisierungen und weitere Ausgestaltungen des erfindungsgemäßen Verfahrens bzw. der erfindungsgemäßen Vorrichtung sind in den abhängigen Ansprüchen 2 bis 7 bzw. 9 bis 12 angegeben.

Die Lösung ist nicht nur dann anwendbar, wenn die Informatlonsquellen und Informationssenken Netzwerkkomponenten, wie beispielsweise Bustellnehmern sind, sondern auch wenn sich die Informationsquelle und die Informationssenke auf demselben computer oder einem vergleichbaren Gerät, bspw. auf einem Steuergerät aus der Automobiltechnik befinden.

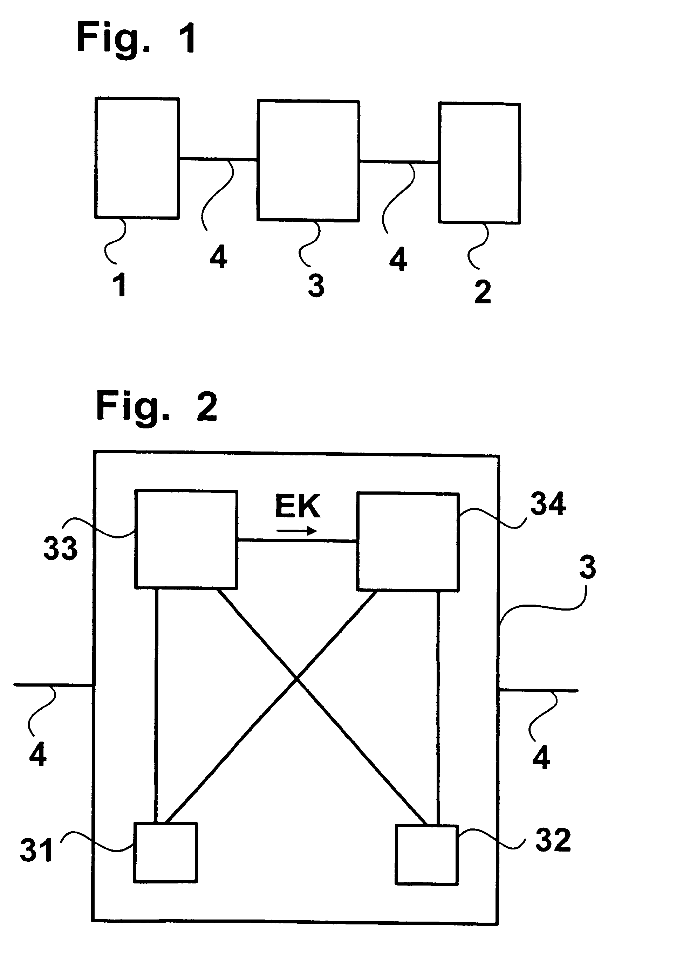

Anhand der Figuren 1 und 2 soll die Erfindung näher erläutert werden. Die Figur 1 zeigt schematisch die Verbindung zwischen Informationsquelle (1), Korrekturvorrichtung (3) und Informationssenke (2).
Die Figur 2 zeigt schematisch Details der erfindungsgemäßen Korrekturvorrichtung (3).

Die Lösung für das der Erfindung zugrunde liegende Problem besteht in der Bereitstellung eines Verfahrens zur Korrektur mindestens einer digitalen Information die von mindestens einer Informationsquelle (1) zu mindestens einer Informationssenke (2) übertragen wird,
wobei die Informationsquelle sowohl mit der Informationssenke als auch mit einer Korrekturvorrichtung (3) mittels eines Datenübertragungsmediums (4) verbunden ist,
wobei die von der Informationsquelle für die Informationssenke bereitgestellte Information einen ersten Variablennamen umfasst,
mit folgenden Verfahrensschritten:
a) Bereitstellen von gelisteten Variablennamen in einem zweiten Speicherbereich (32) der Korrekturvorrichtung (3),
b) Absenden einer Information, die den ersten Variablennamen enthält durch die Informationsquelle,
c) Extrahieren des ersten Variablennamens aus der übertragenen Information und Speicherung in einem ersten Speicherbereich (31),
d) Vergleichen des ersten Variablennamens mit einem gelisteten Variablennamen und Ermittlung eines Entscheidungskriteriums (EK) auf der Basis dieses Vergleichs,
e) Entscheiden anhand des Entscheidungskriteriums (EK), ob der erste Variablenname unverändert bleibt oder durch den gelisteten Variablennamen aus Verfahrensschritt c) ersetzt wird, oder ob die Verfahrensschritte d) und e) unter Verwendung eines weiteren gelisteten Variablennamens und mittels Ermittlung eines weiteren Entscheidungskriteriums wiederholt werden.

Unter "gelisteten" Variablennamen sind solche Variablennamen zu verstehen, die für die Informationssenke zulässig sind oder mit anderen Worten von der Informationssenke "erwartet" werden. Im Gegensatz dazu sind "nicht gelistete" Variablennamen, also solche Variablennamen, die der Informationssenke "unbekannt" sind, und folglich ohne das erfindungsgemäße Verfahren von der Informationssenke in der Regel nicht weiterverarbeitet werden können. Eine Ausnahme von dieser Regel könnte lediglich dann vorliegen, wenn sämtliche ungelisteten Variablennamen in vorhersehbarer Weise von den gelisteten Variablennamen abweichen. Für diesem Spezialfall wäre ein einfacheres Verfahren denkbar, das sämtliche Variablennamen in gleicher Weise umbenennt. Das erfindungsgemäße Verfahren hingegen, setzt keine vorhersehbare Abweichung der Variablennamen voraus sondern ist in der Lage auch bei unvorhersehbarer Abweichung eine Korrektur vorzunehmen.

In einer bevorzugten Ausführungsform des erfindungsgemäßen Verfahrens kann es vorgesehene sein, dass die oben genannten Verfahrensschritte d) und e) solange unter Verwendung jeweils eines weiterer gelisteten Variablennamens wiederholt werden, bis der Vergleich des ersten Variablennamens und des weiteren gelisteten Variablennamens eine Übereinstimmung ergibt, oder alle gelisteten Variablennamen mit dem ersten Variablennamen verglichen worden sind, wobei mit jedem dieser Vergleiche ein zugehöriges Entscheidungskriterium ermittelt wird, das ein Maß für den Grad der Übereinstimmung zwischen dem erstem Variablennamen und dem jeweils zugehörigen weiteren gelisteten Variablennamen darstellt.

In einer weiteren Ausführungsform kann das erfindungsgemäße Verfahren vorsehen, dass das Entscheidungskriterium von der Summe der übereinstimmender Zeichen des ersten Variablennamens und des gelisteten Variablennamens abhängt.

Eine weitere Ausführungsform des Verfahrens kann vorsehen, dass als einer der Schritte der Ermittlung des Entscheidungskriteriums eine Zerlegung des ersten Variablennamens und des gelisteten Variablennamens in Fragmente erfolgt und anschließend ein Vergleich der Fragmente dieser beiden Variablennamen erfolgt.

Dabei kann insbesondere vorgesehen sein, dass die Länge der Fragmente solange iterativ bis zu einer minimalen Fragmentlänge verkleinert wird, bis bei dem Vergleich der Fragmente des ersten Variablennamens und der Fragmente des gelisteten Variablennamens eine oder mehrere Übereinstimmungen festgestellt wird oder werden.

Desweiteren kann bei dieser Ausführungsform die minimale Fragmentlänge vom Anwender dieses Verfahrens einstellbar gestaltet sein.

Soweit das Verfahren vorsieht, dass als einer der Schritte der Ermittlung des Entscheidungskriteriums eine Zerlegung des ersten Variablennamens und des gelisteten Variablennamens in Fragmente erfolgt und anschließend ein Vergleich der Fragmente dieser beiden Variablennamen erfolgt, kann das Verfahren derart weitergebildet sein, dass beim Vergleich der Fragmente des ersten Variablennamens und des gelisteten Variablennamens durch den Anwender des Verfahrens eine unterschiedliche Wichtung einer Übereinstimmung der Variablenfragmente beider Variablennamen in Abhängigkeit der Position der Fragmente innerhalb des Variablennamens vorgebbar ist.

Sollte es bei dem erfindungsgemäßen Verfahren oder einem der weiteren Ausführungsformen, beispielsweise in dem Fall, dass keines der Zeichen des ersten Variablennamens mit einem Zeichen eines gelisteten Variablennamen übereinstimmt, einmal nicht möglich sein einen "falschen" ersten Variablennamen durch einen gelisteten Variablennamen zu ersetzten, so kann es vorgesehen sein, dass dem Anwender des Verfahrens die mangelnde Ersetzbarkeit angezeigt wird und dem Anwender die Option zur manuellen Ersetzung geboten wird.

Das der Erfindung zugrunde liegende Problem wird ebenfalls durch die Bereitstellung einer Korrekturvorrichtung (3) zur Beseitigung von Zeichenfehlern an Variablennamen gelöst, wobei die Variablennamem von einer Informationsquelle (1) an eine Informationssenke (2) übertragbar sind, und wobei die Korrekturvorrichtung folgende Merkmale aufweist:
die Korrekturvorrichtung
   - ist mittels Datenübertragungsmedium (4) mit der Informationsquelle (1) und der Informationssenke (2) verbunden, und
   - weist einen ersten Speicherbereich (31) zur Zwischenspeicherung des von der Informationsquelle gesendeten Variablennamens auf, und
   - weist einen zweiten Speicherbereich (32) zur Speicherung gelisteter Variablennamen auf, und
   - umfasst ein Vergleichsmittel (33), das vorgesehen und eingerichtet ist, den Variablennamen aus dem ersten Speicherbereich (31) mit gelisteten Variablennamen aus dem zweiten Speicherbereich (32) zu vergleichen, aus dem Vergleich ein Entscheidungskriterium (EK) abzuleiten und das Entscheidungskriterium (EK) für ein Ersetzungsmittel (34) bereitzustellen,
   - umfasst desweiter ein Ersetzungsmittel (34), das vorgesehen und eingerichtet ist, in Abhängigkeit des Entscheidungskriteriums (EK), den Variablennamen aus dem ersten Speicherbereich (31) unverändert zu belassen oder durch einem gelisteten Variablennamen aus dem zweiten Speicherbereich (32) zu ersetzen.

Als Datenübertragungsmedium können verschiedene Alternativen Verwendung finden, wie beispielsweise Datenkabel, Funkverbindungen, Glasfaserkabel, ein von der Datenquelle und der Datensenke gemeinsam genutzter Speicher ("Shared Memory"), ein Festplattenspeicher oder dergleichen. Dem Fachmann ist es bekannt, wie diese unterschiedlichen Datenübertragungsmedien in Vorrichtungen implementiert werden können. Deshalb soll in dieser Patentanmeldung nicht näher darauf eingegangen werden.

Das Ersetzten des ersten Variablennamens durch einen gelisteten Variablennamen kann optional einerseits durch einen tatsächlichen Austausch geschehen oder andererseits durch eine Markierung des ersten Variablennamens derart, dass die Markierung auf einen gelisteten Variablennamen verweist, wobei die Informationssenke diesen Verweis auswerten kann.

Eine Ausführungsform der erfindungsgemäßen Korrekturvorrichtung kann vorsehen, dass die Informationsquelle, die Informationssenke und die Korrekturvorrichtung auf einem einzigen Computer angeordnet sind.

Dabei kann vorgesehen sein, dass die Informationsquelle im Wesentlichen durch ein erstes Computerprogramm bzw. einen ersten Computerprogrammteil gebildet ist, und die Informationssenke im Wesentlichen durch ein zweites Computerprogramm bzw. einen zweiten Computerprogrammteil gebildet ist. Alternativ hierzu kann die mit der Korrekturvorrichtung verbundene Informationsquelle auf einem ersten Computern und/oder anderen Mikroprozessor-gesteuerten Gerät (z.B. Steuergeräte aus der Automobilindustrie) angeordnet ist, und die mit der Korrekturvorrichtung verbundene Informationssenke auf einem weiteren Computern und/oder Mikroprozessor-gesteuerten Gerät angeordnet ist, wobei diese Computer und/oder Mikroprozessor-gesteuerten Geräte miteinander vernetzt sind.

Desweiteren kann es hierbei vorgesehen sein, dass die Vernetzung durch ein Bussystem realisiert ist.

Vorteilig an dem erfindungsgemäßen Verfahren und an der erfindungsgemäßen Korrekturvorrichtung ist insbesondere, dass hiermit eventuell auftretende Fehler bzw. unvorhersehbare Abweichungen bei den Variablennamen automatisch korrigierbar sind, und somit eine oftmals aufwendige Fehlersuche vermeidbar ist.

## Patentansprüche

1. Verfahren zur Korrektur mindestens einer digitalen Information die von mindestens einer Informationsquelle (1) zu mindestens einer Informationssenke (2) übertragen wird,
wobei die Informationsquelle (1) sowohl mit der Informationesenke (2) als auch mit einer Korrekturvorrichtung (3) mittels eines Datenübertragungsmedlums (4) verbunden ist,
wobei die von der Informationsquelle (1) für die Informationssenke (2) bereitgestellte Information einen ersten Variablennamen umfasst,
mit folgenden Verfahrensschritten:
a) Bereitstellen von gelisteten Variablennamen in einem zweiten Speicherbereich (32) der Korrekturvorrichtung (3),
b) Absenden einer Information, die den ersten Variablennamen enthält durch die Informationsquelle (1),
c) Extrahieren des ersten Variablennamens aus der übertragenen Information und Speicherung in einem ersten Speicherbereich (31),
d) Vergleichen des ersten Variablennamens mit einem gelisteten Variablennamen und Ermittlung eines Entscheidungskriteriums (EK) auf der Basis dieses Vergleichs,
e) Entscheiden anhand des Entscheidungskriteriums (EK), ob der erste Variablenname unverändert bleibt oder durch den gelisteten Variablennamen aus Verfahrensschritt d) ersetzt wird, oder ob die Verfahrensschritte d) und e) unter Verwendung eines weiteren gelisteten Variablen namens und mittels Ermittlung eines weiteren Entscheidungskriteriums (EK) wiederholt werden.

2. Verfahren nach Anspruch 1, **dadurch gekennzeichnet, dass** die Verfahrensschritte 1.d) und 1.e) solange unter Verwendung jeweils eines weiterer gelisteten Variablennamens wiederholt werden, bis der Vergleich des ersten Variablennamens und des weiteren gelisteten Variablennamens eine Übereinstimmung ergibt, oder alle gelisteten Variablennamen mit dem ersten Variablennamen verglichen worden sind, wobei mit jedem dieser Vergleiche ein zugehöriges Entscheidungskriterium (EK) ermittelt wird, das ein Maß für den Grad der Übereinstimmung zwischen dem erstem Variablennamen und dem jeweils zugehörigen weiteren gelisteten Variablennamen darstellt.

3. Verfahren nach Anspruch 1 oder 2, **dadurch gekennzeichnet, dass** das Entscheidungskriterium (EK) von der Summe der übereinstimmender Zeichen des ersten Variablennamens und des gellsteten Variablennamens abhängt.

4. Verfahren nach Anspruch 1 oder 2, **dadurch gekennzeichnet, dass** als einer der Schritte der Ermittlung des Entscheidungskriteriums (EK) eine Zerlegung des ersten Variablennamens und des gelisteten Variablennamens in Fragmente erfolgt und anschließend ein Vergleich der Fragmente dieser beiden Variablennamen erfolgt.

5. Verfahren nach Anspruch 4, **dadurch gekennzeichnet, dass** die Länge der Fragmente solange iterativ bis zu einer minimalen Fragmentlänge verkleinert wird, bis bei dem Vergleich der Fragmente des ersten Variablennamens und der Fragmente des gelisteten Variablennamens eine oder mehrere Übereinstimmungen festgestellt wird oder werden.

6. Verfahren nach Anspruch 5, **dadurch gekennzeichnet, dass** die minimale Fragmentlänge vom Anwender dieses Verfahrens einstellbar ist.

7. Verfahren nach einem der Ansprüche 4 bis 6, **dadurch gekennzeichnet, dass** beim Vergleich der Fragmente des ersten Variablennamens und des gelisteten Variablennamens durch den Anwender des Verfahrens eine unterschiedliche Wichtung einer Übereinstimmung der Variablenfragmente beider Variablennamen in Abhängigkeit der Position der Fragmente innerhalb des Variablennamens vorgebbar ist.

8. Korrekturvorrichtung (3) zur Beseitigung von Zeichenfehlern an Variablennamen, wobei die Variabiennamen von einer Informationsquelle (1) an eine Informationssenke (2) übertragbar sind, mit folgenden Merkmalen:
die Korrekturvorrichtung (3)
- ist mittels Datenübertragungsmedium (4) mit der Informationsquelle (1) und der Informationssenke (2) verbunden, und
- weist einen ersten Speicherbereich (31) zur Zwischenspeicherung des von der Informationsquelle (1) gesendeten Variablennamens auf, und
- weist einen zweiten Speicherbereich (32) zur Speicherung gelisteter Variablennamen auf, und
- umfasst ein Vergleichsmittel (33), das vorgesehen und eingerichtet ist, den Variablennamen aus dem ersten Speicherbereich (31) mit gelisteten Variablennamen aus dem zweiten Speicherbereich (32) zu vergleichen, aus dem Vergleich ein Entscheidungskriterium (EK) abzuleiten und das Entscheidungskriterium (EK) für ein Ersetzungsmittel (34) bereitzustellen,
- umfasst desweiter ein Ersetzungsmittel (34), das vorgesehen und eingerichtet ist, in Abhängigkeit des Entscheidungskriteriums (EK), den Variablennamen aus dem ersten Speicherbereich (31) unverändert zu belassen oder durch einem gelisteten Variablennamen aus dem zweiten Speicherbereich (32) zu ersetzen.

9. Korrekturvorrichtung (3) nach Anspruch 8, **dadurch gekennzeichnet, dass** die Informationsquelle (1), die Informationssenke (2) und die Korrekturvorrichtung (3) auf einem einzigen Computer angeordnet sind.

10. Korrekturvorrichtung (3) nach Anspruch 9, **dadurch gekennzeichnet, dass** die Informationsquelle (1) im Wesentlichen durch ein erstes Computerprogramm bzw. einen ersten Computerprogrammtell gebildet ist, und die Informationssenke (2) im Wesentlichen durch ein zweites Computerprogramm bzw. einen zweiten Computerprogrammteil gebildet ist.

11. Korrekturvorrichtung (3) nach Anspruch 8, **dadurch gekennzeichnet, dass** die Informationsquelle (1) auf einem ersten Computern und/oder anderen Mikroprozessor-gesteuerten Gerät (z.B. Steuergeräte aus der Automobillndustrie) angeordnet Ist, und die Informationssenke (2) auf einem weiteren Computern und/oder anderen Mikroprozessor-gesteuerten Gerät angeordnet ist, wobei diese Computer und/oder Mikroprozessor-gesteuerten Geräte miteinander vernetzt sind.

12. Korrekturvorrichtung (3) nach Anspruch 11, **dadurch gekennzeichnet, dass** die Vernetzung durch ein Bussystem realisiert ist.

## Claims

1. A method for correcting at least one digital Information item which Is transmitted by at least one information source (1) to at least one information sink (2),
wherein the information source (1) is connected to both the Information sink (2) and to a correcting device (3) by means of a data transmission medium (4),
wherein the Information provided by the information source (1) for the information sink (2) comprises a first variable name,
having the following method steps;
a) providing listed variable names in a second memory area (32) of the correcting device (3),
b) the information source (1) sending an information item which contains the first variable name,
c) extracting the first variable name from the transmitted information item and storing in a first memory area (31),
d) comparing the first variable name with a listed variable name and determining a decision criterion (EK) on the basis of this comparison,
e) using the decision criterion (EK) to decide whether the first variable name remains unchanged or is substituted by the listed variable name from method step d), or whether the method steps d) and e) are repeated using a further listed variable name and by determining a further decision criterion (EK).

2. The method according to Claim 1, **characterized in that** the method steps 1.d) and 1.e) are repeated using an additional listed variable name In each case, until either the comparison of the first variable name and the additional listed variable name produces a match, or all listed variable names have been compared with the first variable name, wherein with each of these comparisons an associated decision criterion (EK) is determined which represents a measure of the degree of matching between the first variable name and the respective associated additional listed variable name.

3. The method according to Claim 1 or 2 **characterized in that** the Decision criterion (EK) depends on the sum of the matching characters of the first variable name and the listed variable name.

4. The method according to Claim 1 or 2, **characterized in that** as one of the steps to determine the decision criterion (EK), the first variable name and the listed variable name are decomposed into fragments and then a comparison is made of the fragments of these two variable names.

5. The method according to Claim 4, **characterized in that** the length of the fragments is reduced iteratively to a minimum fragment length until one or more matches is or are found When comparing the fragments of the first variable name and the fragments of the listed variable name.

6. The method according to Claim 5, **characterized in that** the minimum fragment length can be set by the user of this method.

7. The method according to one of Claims 4 to 6, **characterized in that** as part of the comparison of the fragments of the first variable name and the listed variable name a different weighting of a match of the variable fragments of the two variable names can be specified by the user of the method, depending on the position of the fragments within the variable name.

8. A correcting device (3) for eliminating character errors in variable names, wherein the variable names can be transmitted from an Information source (1) to an information sink (2), with the following features
the correcting device (3)
- is connected by means of a data transmission medium (4) to the information source (1) and the information sink (2), and
- has a first memory area (31) for temporarily storming the variable name sent by the information source (1), and
- has a second memory area (32) for storing listed variable names, and
- comprises a comparison means (33) which is provided and designed to compare the variable name from the first memory area (31) with listed variable names from the second memory area (32), to derive a decision criterion (EK) from the comparison, and to provide the decision criterion (EK) for a substitution means (34),
- additionally comprises a substitution means (34) which is provided and designed, depending on the decision criterion (EK), to leave the variable name from the first memory area (31) unchanged or to substitute it by a listed variable name from the second memory area (32).

9. The correcting device (3) according to Clam 8, **characterized in that** the Information source (1), the information sink (2) and the correcting device (3) are arranged on a single computer

10. The correcting device (3) according to Claim 9, **characterized in that** the information source (1) is substantially formed by a first Computer program or a first computer program section, and the information sink (2) is substantially formed by a second computer program or a second computer program section.

11. The correcting device (3) according to Claim 8, **characterized in that** the Information source (1) is arranged on a first computer and/or, other microprocessor-controlled device (e.g. control devices from the automobile industry), and the information sink (2) is arranged on an additional computer and/or other microprocessor-controlled device, wherein these computers and/or microprocessor-controlled devices are networked together,

12. The correcting device (3) according to Claim 11, **characterized in that** the networking is implemented by means of a bus system

## Revendications

1. Procédé pour Corriger au moins une information numérique qui est transmise depuis au moins une source d'informations (1) vers au moins un récepteur d'informations (2),
sachant que la source d'informations (1) est reliée aussi bien au récepteur d'informations (2) qu'à un dispositif de correction (3) via un moyen de transmission de données (4),
sachant que l'information délivrée par la source d'informations (1) pour le récepteur d'informations (2) comprend un premier nom de variables,
avec les étapes de procédé suivantes :
a) fournir des noms de variables listées dans une deuxième zone de mémoire (32) du dispositif de correction (3),
b) envoyer, par la source d'informations (1), une information qui contient le premier nom de variable,
c) extraire le premier nom de variable depuis l'information transmise et le mémoriser dans une première zone de mémoire (31),
d) comparer le premier nom de variable avec un nom de variable listé et déterminer un critère de décision (EK) sur la base do cette comparaison,
e) décider, à l'aide du critère de décision (EK), si le premier nom de variable reste inchangé, ou s'il doit être remplacé par le nom de variable listé issu de l'étape de procédé d), ou si les étapes de procédé d) et e) doivent être répétées faisant appel d'un nom de variable supplémentaire listé et par détermination d'un critère de décision (EK) supplémentaire.

2. Procédé selon la revendication 1, **caractérisé en ce que** les étapes de procécé 1.d) et 1.e) sont répétées en faisant appel à chaque fois à un nom de variable listé supplémentaire jusqu'à ce que la comparaison entre le premier nom de variable et le nom de variable listé supplémentaire donne une concordance, ou que tous les noms de variables listés aient été comparés avec le premier nom de variable, sachant qu'un critère de décision (EK) correspondant est déterminé à chacune de ces comparaisons, qui représente une mesure du degré de concordance antre le premier nom de variable et le nom de variable supplémentaire listé correspondant.

3. Procédé selon la revendication 1 on 2, **caractérisé en ce que** le critère de décision (EK) dépend de la somme des caractères concordants du premier nom de variables et du nom de variable listé.

4. Procédé selon la revendication 1 ou 2, **caractérisé en ce que** comme l'une des étapes de détermination du critère de décision (EK), une décomposition du premier nom de variable et du nom de variable listé en fragments est effectuée et, ensuite, une comparaison des fragments de ces deux noms de variables est effectuée.

5. Procédé selon revendication 4, **caractérisé en ce que** la longueur des fragments est réduite itérativement jusqu'à une longueur de fragment minimale, jusqu'à ce qu'une ou plusieurs concordance(s) soit/soient constatée(s) lors de la comparaison des fragments du premier nom de variable avec les fragments du nom de variable listé.

6. Procédé selon la revendication 5, **caractérisé en ce que** la longueur de fragment minimale peut être réglée par l'utilisateur de ce procédé.

7. Procédé selon l'une, quelconque des revendications 4 à 6, **caractérisé en ce que** lors de la comparaison des fragments du premier nom de variable avec ceux du nom de variable listé par l'utilisateur de ce procédé, une pondération différente d'une concordance des fragments de variable des deux noms de variable peut être prédéterminée en fonction de la position des fragments au sein du nom de variable.

8. Dispositif de correction (3) pour la suppression d'erreurs de caractères dans des nomes de variable, sachant que les noms de variable peuvent être transmis d'une source d'informations (1) vers un récepteur d'informations (2), avec les caractéristiques suivantes :
le dispositif de correction (3)
- est connecté via un moyen de transmission de données (4) à la source d'informations (1) et au récepteur d'informations (2), et
- présente une première zone de mémoire (31) pour la mémorisation temporaire du nom de variable émis par la source d'informations (1), et
- présenté une secondé zone de mémoire (32) pour la mémorisation de noms de variables listés, et
- comprend, un moyen de comparaison (33), qui est prévu et configuré pour comparer des noms de variables issus de la première zone de mémoire (31) avec des noms de variables listés issus de la seconde zone de mémoire (32), déduite de la comparaison un critère de décision (EK) et mettre le critère due décision (EK) à la disposition d'un moyen de substitution (34),
- comprend en outre un moyen de substitution (34), qui est prévu et configuré pour, an fonction du critère de décision (EK), laisser inchangé le nom de variable issu de la première zone de mémoire (31) ou le remplacer par un nom de variable listé issu de la seconde zone de mémoire (32).

9. Dispositif de correction (3) selon la revendication 8, **caractérisé en ce que** la source d'informations (1), le récepteur d'informations (2) et le dispositif de correction (3) sont disposés dans un seul ordinateur.

10. Dispositif de correction (3) selon la revendication 9, **caractérise en ce que** la source d'informations (1) est constituée essentiellement par un premier logiciel d'ordinateur ou on premier segment de programme d'ordinateur et le récepteur d'informations (2) est constitué essentiellement par un second logiciel d'ordinateur ou un second segment de logiciel d'ordinateur.

11. Dispositif de correction (3) selon la revendication 8, **caractérisé en ce que** la source d'informations (1) et disposée dans un premier ordinateur et/ou un autre appareil piloté par microprocesseur (par exemple appareils de commande de l'industrie automobile et le récepteur d'informations (2) est disposé dans un second ordinateur et/ou un autre appareil piloté par microprocesseur, sachant que ces ordinateurs et/ou appareils pilotés par microprocesseur sont mis en réseau les uns avec les autres.

12. Dispositif de correction (3) selon la revendication 11, **caractérisé en ce que** la mise en réseau est réalisée par un système de bus.
